# EUROPÄISCHE PATENTSCHRIFT

(11) **EP 0 943 901 B1**
(45) Veröffentlichungstag und Bekanntmachung des Hinweises auf die Patenterteilung: **18.12.2002**
(21) Anmeldenummer: 99104569.1
(22) Anmeldetag: 08.03.1999
(51) Int. Cl.: G01F 5/00

(54) **Armatur zur hydraulischen Durchflussmessung**
Fitting for a liquid flowmeter
Raccord pour un dispositif de mesure de débit d'un liquide

(30) Priorität: 19.03.1998 CH 66698
(43) Veröffentlichungstag der Anmeldung: 22.09.1999
(73) Patentinhaber: Watts Dumser GmbH & Co. KG, 76829 Landau (DE)
(72) Erfinder: Spiess, Fritz, CH-8918 Unterlunkhofen (CH)
(74) Vertreter: Patentanwälte Möll und Bitterich

(56) Entgegenhaltungen:
- DE-U- 8 220 193
- FR-A- 1 042 892
- US-A- 2 723 563
- "COMPTEUR DIRECT DE VAPEUR" MESURES & CONTROLE INDUSTRIEL, Bd. 16, Nr. 169, Juni 1951 (1951-06), Seite 281 XP002076651

## Beschreibung

### Technisches Gebiet:

Die vorliegende Erfindung betrifft eine Armatur zur hydraulischen Durchflussmessung, mit einem einen Durchfluss-Hauptkanal enthaltenden Armaturgehäuse, einer im Hauptkanal angeordneten Drosselstelle, einem vor und hinter der Drosselstelle mit dem Hauptkanal verbundenen, einen Teildurchfluss führenden Bypasskanal und einer vom Teildurchfluss beaufschlagten Durchfluss-Messeinrichtung mit beweglichem Mess- und Anzeigeorgan.

### Stand der Technik:

Armaturen dieser Art sind für verschiedene Durchflussmedien verwendbar; insbesondere werden sie bei Warmwasserheizungen eingesetzt, um den Heizwasser-Durchfluss in den verschiedenen Leitungssträngen anzuzeigen. Diese Anzeige entspricht physikalisch einer Messung der augenblicklichen Durchflussmenge (Volumen pro Zeiteinheit) in Abhängigkeit von der Durchflussgeschwindigkeit; das Anzeigegerät zeigt die Durchflussmenge unmittelbar in der Einheit [L/min] an. Zur Einstellung einer bestimmten Durchflussmenge dient jeweils ein einstellbares Drosselorgan, wie zum Beispiel ein Kugelhahn oder dergleichen, das im Armaturgehäuse integriert oder separat im Leitungsstrang eingebaut sein kann.

Bei einer bekannten, gattungsgemäßen Armatur (DE-GM 82 20 193.5) ist eine Bypassleitung außerhalb des Hauptgehäuses und achsparallel zum Hauptkanal an zwei Gehäuseanschlüssen angeflanscht. Die Bypassleitung weist ein Fenster auf und enthält als Messstrecke einen durchsichtigen, vom Teildurchfluss durchströmten Rohrabschnitt. Im letzteren befindet sich ein gegen eine Schraubenfeder beweglicher Messkolben, der zugleich das Anzeigeorgan bildet.

Damit der Bypasskanal nicht dauernd durchströmt ist bzw. eine Verschmutzung der Messeinrichtung durch Ablagerungen aus dem Durchflussmedium in Grenzen gehalten werden kann, ist in den beiden erwähnten Gehäuseanschlüssen je ein Absperrhahn eingebaut. Die Herstellung und Montage dieser bekannten Armatur sind sehr aufwendig, insbesondere sind zahlreiche Dichtungen erforderlich. Im übrigen müssen für eine korrekte Messung beide vorgenannten Absperrhähne geöffnet sein; ihren Zweck erfüllen sie jedoch nur dann, wenn sie gleich nach der Messung vollständig geschlossen werden.

Ein Messgerät für fließende, insbesondere gasförmige Medien, wie zum Beispiel Dampf mit einem in einem Seitenstutzen angeordneten Messteil und einem Anzeigeteil ist auch aus US-A 2 723 563 bekannt. Dieses Messgerät ist so aufgebaut, dass es das Integral des Durchflusses anzeigt, und zwar in einer Volumeneinheit. Bei diesem Messgerät wird an einer im Hauptkanal angeordneten Drosselstelle ein Teilstrom des Mediums abgezweigt, in einem Bypass an der Drosselstelle vorbeigeführt und danach wieder mit dem im Hauptkanal fließenden Medium vereinigt. Die Volumenmessung erfolgt im Bypass durch einen in einer Art Ringkammer angeordneten Turbinenrotor, dessen Drehbewegung durch eine Welle auf ein Getriebe und über dieses auf ein Zählwerk zur Anzeige übertragen wird.

### Darstellung der Erfindung:

Ausgehend von einer Armatur der eingangs genannten Gattung und unter Beibehaltung der Durchflussmessung im Nebenstrom sollen mit der Erfindung die erwähnten Nachteile des Standes der Technik behoben werden; insbesondere sollen der Fertigungs- und Montageaufwand reduziert und die Gefahr der Verschmutzung durch Ablagerungen aus dem Durchflussmedium beseitigt werden.

Diese Aufgabe wird erfindungsgemäß durch die im Anspruch 1 angegebenen Merkmale gelöst.

Vorteilhafte Weiterbildungen ergeben sich aus den Unteransprüchen.
Mit der Erfindung wird der Zusammenbau der Armatur - dank Einlochbefestigung der Durchfluss-Messeinrichtung - erheblich vereinfacht, auch deshalb, weil besondere Absperrorgane zur Trennung des Bypasskanals vom Hauptkanal entfallen. Ferner kann das Armaturgehäuse mit einer vergleichsweise geringeren Einbaulange (bei gegebenem Nenndurchmesser) gestaltet werden. Im weiteren bleibt der Anzeigeteil, wenn auch vom Durchflussmedium benetzt, von der Strömung praktisch vollständig abgetrennt, wodurch die Ablesbarkeit ohne Wartung erhalten bleibt.

Vorteilhafte weitere Ausgestaltungen der erfindungsgemäßen, im Patentanspruch 1 definierten Armatur sind in den abhängigen Ansprüchen 2 bis 6 angegeben.

Kurze Beschreibung der Zeichnungen:

Die Erfindung wird nachstehend anhand von Ausführungsbeispielen in Verbindung mit der Zeichnung näher erläutert.
- Fig. 1: zeigt eine erste, mit einem Kugelhahn kombinierte Ausführungsform der Erfindung, mit dem Armaturgehäuse im Längsschnitt und der Durchfluss-Messeinrichtung in Ansicht,
- Fig. 2: zeigt ein Detail der Fig. 1 im größeren Maßstab,
- Fig. 3: zeigt ein weiteres Ausführungsbeispiel in analoger Darstellung, mit der Durchfluss-Messeinrichtung im Zustand während der Messung,
- Fig. 4: ist ein Schnitt entlang der Linie IV-IV in Fig. 3 und
- Fig. 5: ist eine Teildarstellung analog der Fig. 3, jedoch mit blockierter Messeinrichtung.

Wege zur Ausführung der Erfindung und gewerbliche Verwertbarkeit:

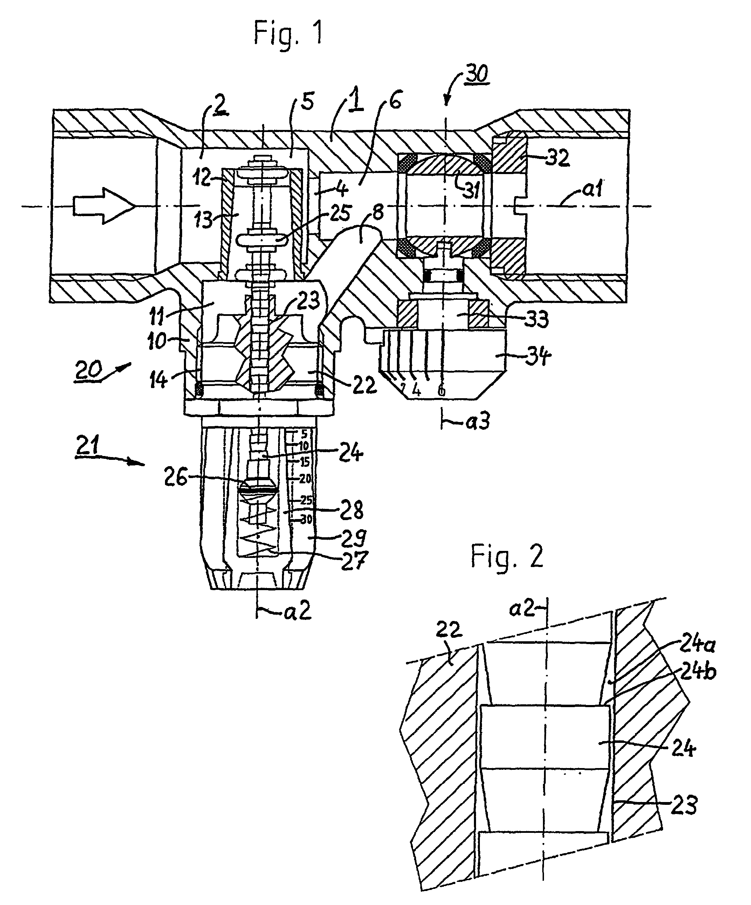

Die in Fig. 1 als Beispiel dargestellte Messarmatur weist ein Armaturgehäuse 1 auf, welches einen Durchfluss-Hauptkanal 2 mit der Hauptachse a1 umschließt. Derartige Armaturen werden beispielsweise in Warmwasser-Heizanlagen eingebaut, wobei das Medium (Heizwasser), dessen Durchfluss gemessen werden soll, den Hauptkanal 2 in der angegebenen Pfeilrichtung durchströmt. Im vorliegenden Fall ist ein einstellbares Drosselorgan in Gestalt eines Kugelhahns 30 im Armaturgehäuse integriert, um den Durchfluss auf einen bestimmten Wert einzustellen; ein entsprechendes Drosselorgan kann aber auch unabhängig von der Messarmatur an anderer Stelle im Leitungsstrang eingebaut sein, oder der Durchfluss kann auf andere Weise, z.B. durch Steuerung einer Umwälzpumpe, beeinflusst werden.

Für die Durchflussmessung ist im Hauptkanal 2 eine Drosselstelle 4 angeordnet Diese unterteilt den Hauptkanal 2 in einen Abschnitt 5 vor und einen Abschnitt 6 hinter der Drosselstelle 4. Gemäß dem hier angewandten, an sich bekannten Messprinzip wird durch die zwischen Stellen vor und hinter der Drosselstelle 4 bestehende, vom Durchfluss abhängige Druckdifferenz ein Teildurchfluss des Mediums erzeugt und durch einen Bypasskanal geleitet, der an den genannten Stellen mit dem Hauptkanal 2 verbunden ist. Von der Messung des Teildurchflusses im Bypasskanal wird dann auf den Durchfluss im Hauptkanal 2 geschlossen.

Für die Bildung eines Bypasskanals und den Einbau einer vom Teildurchfluss beaufschlagten Durchfluss-Messeinrichtung weist das Armaturgehäuse 1 nach Fig. 1 einen Seitenstutzen 10 auf, der eine Nebenkammer 11 umschließt. Die Achse des Seitenstutzens 10, die zur Hauptachse a1 senkrecht steht, ist in Fig. 1 mit a2 bezeichnet Die Nebenkammer 11 ist im Innern des Gehäuses 1 direkt und dauernd mit dem Hauptkanal 2 vor und hinter der Drosselstelle 4 verbunden, nämlich einerseits durch die Bohrung 13 eines Rohrstücks 12 mit dem Abschnitt 5 und andererseits über eine Schrägbohrung 8 mit dem Abschnitt 6 des Hauptkanals 2. Die erwähnten Hohlräume - Bohrung 13, Nebenkammer 11 und Bohrung 8 - bilden zusammen den Bypasskanal. Der Bypasskanal ist also im Innern des Gehäuses 1 permanent und ohne Absperrorgane mit dem Hauptkanal 2 verbunden.

An einer Messeinrichtung für den Teildurchfluss im Bypasskanal ist gemäß Fig. 1 generell ein Messteil 20 und ein Anzeigeteil 21 zu unterscheiden. Diese Durchfluss-Messeinrichtung ist mittels Einlochbefestigung im Seitenstutzen 10 montiert, indem ein "tragendes" Einschraubteil 22 in einem Innengewinde 14 des Stutzens 10 dichtend eingesetzt ist. Dadurch ist die Nebenkammer 11 nach außen abgeschlossen, wobei der Anzeigeteil 21 sich außerhalb des Stutzens 10 befindet. Der Messteil 20 ist dagegen der Kammer 11 zugewandt, und nur dieser wird vom Teildurchfluss im Bypasskanal beaufschlagt.

Der Aufbau und die Wirkungsweise der Durchfluss-Messeinrichtung 20, 21 sind wie folgt: Ein Prallteller 25, eine Verbindungsstange 24 und eine Zeigerscheibe 26 bilden zusammen ein Mess- und Anzeigeorgan, wobei die Stange 24 in einer Axialbohrung 23 des Einschraubteils 22 längsbeweglich geführt ist. Ein Schauglas 28 des Anzeigeteils ist auf nicht näher dargestellte Weise mit dem Einschraubteil 22 dicht verbunden. Das untere Ende der Stange 24 mit der Scheibe 26 bewegt sich im Innenraum des Schauglases 28 und ist über eine Druckfeder 27 am Schauglas abgestützt. Das Schauglas 28 ist von einem hülsenförmigen Skalenträger 29 umgeben. Dieser ist längs angeschnitten und trägt an einer Schnittfläche die Skalenbeschriftung; die Skala bezieht sich direkt auf den Durchfluss im Hauptkanal 2 (z.B. L/min.). Der Skalenträger 29 ist am Schauglas 28 axial fixiert, kann aber um die Achse a2 in eine geeignete Ableserichtung gedreht werden.

Die eigentliche Bypass-Messstrecke befindet sich, wie aus der Fig. 1 hervorgeht, innerhalb des Rohrstücks 12. Der Prallteller 25 wird von der Teilströmung im Bypasskanal beaufschlagt, und entsprechend wird das Mess- und Anzeigeorgan 24, 25, 26 entgegen der Kraft der Feder 27 verschoben. Die beiden Extremlagen des Pralltellers 25 sind in Fig. 1 gestrichelt angedeutet. Wie ersichtlich, ragt das die Messstrecke bestimmende Rohrstück 12 in den vor der Drosselstelle 4 liegenden Abschnitt 5 des Hauptkanals 2 hinein, wo es von der Hauptströmung umflossen wird und wobei die Teilströmung oben in das Rohrstück eintritt. Die Bohrung 13 bildet dabei eine Erweiterung der Nebenkammer 11 im Seitenstutzen 10. Grundsätzlich könnte sich die Messstrecke (bei entsprechender Anordnung eines Rohrstücks 12) auch nur teilweise im Hauptkanal und mit dem unteren Teil in der Nebenkammer 11 befinden, oder sie könnte (bei entsprechender Verlängerung des Stutzens 10 und der Nebenkammer 11) in den Stutzen verlegt sein. Die Anordnung nach Fig. 1 hat jedoch den Vorteil, dass die Gesamtausdehnung der Armatur quer zur Hauptachse a1, also in Richtung der Achse a2, stark vermindert ist.

Es kann zweckmäßig sein, über dem Anzeigeteil 21 eine durchsichtige Schutzkappe vorzusehen (nicht dargestellt), um dieses gegen Schläge und Verschmutzung von außen zu schützen. Eine solche Schutzkappe kann am Außenumfang des Seitenstutzens 10 geführt und mit dem Skalenträger 29 drehfest verbunden sein, so dass der letztere zusammen mit der Kappe gedreht werden kann.

Wie erwähnt und aus Fig. 1 ersichtlich, ist nur der Messteil 20 vom Teildurchfluss im Bypasskanal beaufschlagt. Infolge des notwendigen Spiels zwischen der Verbindungsstange 24 und der Bohrung 23 besteht jedoch eine Verbindung zwischen der Nebenkammer 11 und dem Innenraum des Schauglases 28, weshalb dieses mit "stehender" Flüssigkeit gefüllt ist. Bei jeder Bewegung der Teile 24, 25 und 26 erfolgt auch ein gewisser Flüssigkeitsaustausch entlang der Stange 24; bewegt sich die Stange nach unten (in Fig. 1), wird Flüssigkeit aus dem Schauglas 28 in die Kammer 11 verdrängt, und bei umgekehrter Bewegung wird Flüssigkeit in das Schauglas 28 angesaugt. Bei der dauernden Verbindung des Bypasskanals zum Hauptkanal 2 könnten deshalb infolge von Schwankungen des Durchflusses bzw. von der Strömung überlagerten Pulsationen mit der Zeit feine Schmutz- und Schwebeteile, die im Hauptstrom mitgeführt werden, in das Schauglas gelangen und dieses verschmutzen. Um diesem Effekt zu begegnen, kann die Verbindungsstange 24 in besonderer Weise ausgebildet sein, wie in Fig. 2 vergrößert dargestellt ist.

Die Stange 24 ist mit zahlreichen Umfangsrillen 24a versehen, die ihr eine Art Sägezahnprofil verleihen. Die in Radialebenen (senkrecht zur Achse a2) liegenden Ringflächen 24b der Rillen 24a sind dabei der Nebenkammer 11 zugekehrt. Die Wirkung dieser Rillen ist derart, dass sie bei Längsbewegungen der Stange 24 und - wie oben beschrieben - jeweils entgegengesetzt gerichteter Strömung im Spalt entlang der Stange, Flüssigkeitswirbel in den Rillen erzeugen. Dabei werden Schmutzpartikel, die nach unten in Richtung Schauglas mitgeführt werden, in den Rillen "eingefangen" und lagern sich bevorzugt auf den Ringflächen 24b ab. Wenn umgekehrt Flüssigkeit aus dem Schauglas verdrängt wird, kann sie in den Rillen abgelagerte Partikel wieder nach oben wegbefördern. Dadurch kann eine störende Verschmutzung des Schauglases über lange Betriebsperioden oder dauernd verhindert werden.

Der gemäß Fig. 1 in die Armatur integrierte Kugelhahn 30 ist im wesentlichen bekannt und wie folgt aufgebaut: Das Hahnküken 31 mit zugehörigen Ringdichtungen ist von einem Gewindering 32 im Armaturgehäuse 1 festgehalten. Mit dem Küken 31 steht eine Drehachse 33 im Eingriff, die in einer Radialbohrung des Gehäuses 1 gelagert ist. Zur Betätigung des Kükens dient ein mit der Achse 33 verbundener Drehgriff 34. Eine sich über den Drehwinkel von 90° erstreckende Einstellskala ist am Umfang wie auch auf der (z.B. kegeligen) Stirnseite des Drehgriffes 34 aufgetragen und außerdem (in der Zeichnung nicht sichtbar) auf der "Rückseite" des Griffes punktsymmetrisch wiederholt. Dadurch besteht bei allen vorkommenden Einbausituationen eine gute Ablesbarkeit.

Bei der dargestellten Anordnung des Kugelhahns 30 in der Armatur liegt die Drehachse a3 des aus dem Armaturgehäuse 1 herausragenden Drehgriffes 34 parallel zur Achse a2 des Seitenstutzens 10. Der Drehgriff 34 und der Anzeigeteil 21 mit der Durchfluss-Skala liegen also in der gleichen Ebene nebeneinander auf der gleichen Seite der Hauptachse a1. Dies ist von großem Vorteil, weil der mit dem Kugelhahn eingestellte Durchflusswert jeweils unmittelbar daneben am Anzeigeteil abgelesen werden kann. Auch die weiter oben erwähnte Möglichkeit, den Skalenträger 29 auf dem Schauglas 28 je nach Einbaulage der Armatur, d.h. je nach Blickrichtung des Benutzers zu drehen, ist in diesem Zusammenhang besonders zweckmäßig.

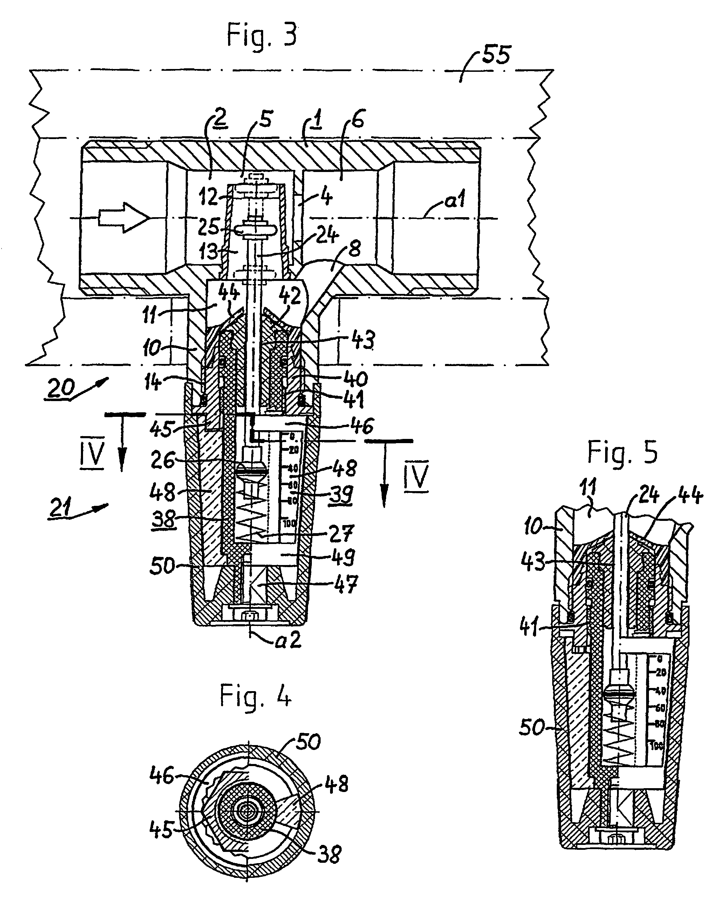

In den Fig. 3 bis 5 ist ein weiteres Ausführungsbeispiel der erfindungsgemäßen Armatur dargestellt, in diesem Fall ohne integriertes, einstellbares Drosselorgan für den Durchfluss. Bei der Ausführungsvariante nach Fig. 3 bis 5 sind die bezüglich Funktion entsprechenden Teile mit gleichen Bezugszahlen bezeichnet wie beim Beispiel nach Fig. 1 und 2, obwohl die konstruktive Gestalt teilweise etwas abweicht. Die Unterschiede bei diesem weiteren Ausführungsbeispiel gegenüber dem vorangehenden betreffen hauptsächlich konstruktive Maßnahmen zur Reinhaltung des Schauglases und damit zusammenhängende Abweichungen im Aufbau der Durchfluss-Messeinrichtung. In den Fig. 3 und 5 sind der Skalenträger 39 und der untere Teil des Schauglases 38 halb im Schnitt und halb in Ansicht gezeichnet.

Das Armaturgehäuse 1 mit dem Hauptkanal 2, der Seitenstutzen 10 mit Nebenkammer 11, der Bypasskanal 13, 11, 8, die Erweiterung 13 im Rohr 12 für die Messstrecke sowie das bewegliche Mess- und Anzeigeorgan 24, 25, 26 sind im wesentlichen gleich ausgeführt wie beim Beispiel nach Fig. 1, abgesehen davon, dass die Verbindungsstange 24 hier keine Umfangsrillen aufweist. Ein Einschraubteil 40 der Durchfluss-Messeinrichtung 20, 21 ist wiederum mit dem Innengewinde 14 des Seitenstutzens 10 dicht verschraubt, wodurch die Kammer 11 nach außen abgeschlossen ist. Das Schauglas 38 ragt in den Einschraubteil 40 hinein und ist als Gewindespindel ausgebildet, wobei sein Außengewinde mit einem Innengewinde 41 des Einschraubteils im Eingriff steht. Am kammerseitigen Ende des Schauglases ist ein Kopfteil 42 eingesetzt. Dieses enthält die axiale Bohrung 43, die sich zwischen der Kammer 11 und dem Innenraum des Schauglases 38 erstreckt und die Verbindungsstange 24 führt. Ein innerhalb des Seitenstutzens 10 auf dem Einschraubteil 40 aufgesetztes Elastomerteil bildet eine durchbohrte Manschette 44, die am Kopfteil 42 anliegt und die Stange 24 umfasst. Die Wirkungsweise dieser gummielastischen Manschette 44 wird weiter unten in Verbindung mit der Fig. 5 erläutert.

Der Anzeigeteil 21 außerhalb des Seitenstutzens 10 ist folgendermaßen gestaltet: Das Schauglas 38 ist von einer transparenten Kappe 50 umgeben. Diese ist einerseits am Umfang des Stutzens 10 geführt und andererseits mit dem Schauglas 38 drehfest verbunden, indem sie einen am Schauglas angeformten Vierkant 47 übergreift. Im Raum zwischen dem Schauglas 38 und der Kappe 50 ist der Skalenträger 39 angeordnet. Dieser besteht aus zwei Längsstegen 48, deren Enden durch zwei das Schauglas 38 umgebende Ringe 46 bzw. 49 verbunden sind. Die Längsstege 48 weisen Skalenbeschriftungen auf, die von zwei gegenüberliegenden Seiten des Schauglases sichtbar sind. Mit einem einspringenden Rand des Ringes 49 (links in Fig. 3 und 5) ist der Skalenträger 39 am Schauglas drehbar geführt und zwischen dem letzteren und der Kappe 50 axial gehalten. Der Ring 46 weist eine Innenverzahnung auf, die über einen am Einschraubteil 40 vorhandenen Sechskant 45 greift (Fig. 4). Beim Zusammenbau der Armatur bzw. des Anzeigeteils 21, solange die Kappe 50 noch nicht montiert ist, kann der Skalenträger in einer für die Ablesung günstigen Drehlage eingesetzt werden; diese Drehlage bleibt dann beim Gebrauch erhalten, kann jedoch bei Bedarf angepasst werden.

Durch Drehen der Kappe 50 wird das Schauglas 38 über den Vierkant 47 mitgedreht und am Gewinde 41 relativ zum Einschraubteil 40 axial verschoben. Die Innenverzahnung des Ringes 46 gleitet dabei entlang dem Sechskant 45 und der Skalenträger 39 behält seine Drehlage bei.

In der Fig.. 3 ist der Zustand während einer Messung dargestellt. Die Kappe 50 ist im Uhrzeigersinn gedreht und das Schauglas 38 als "steigende Spindel" zur Kammer 11 hin vorgeschoben. Infolge des axialen Hubes der Teile 38 und 42 ist die Manschette 44 aufgestülpt und gespreizt, so dass deren zentrale Bohrung die Stange 24 freigibt. Das Mess- und Anzeigeorgan 24, 25, 26 kann sich somit in der Führungsbohrung 43 axial frei bewegen, d.h. sich entsprechend dem Teildurchfluss im Bypasskanal einstellen und den Wert anzeigen (es besteht zugleich Flüssigkeitsverbindung entlang der Bohrung 43 zum Innenraum des Schauglases 38).

Durch Zurückdrehen der Kappe 50 entgegen dem Uhrzeigersinn um einen bestimmten Betrag (z.B. eine halbe oder ganze Umdrehung) wird die Messung beendet; es wird dabei der Zustand gemäß Fig. 5 herbeigeführt. Indem das Schauglas mit dem Kopfteil 42 um den Hub entsprechend der Drehung und Gewindesteigung zurückweicht, entfällt die erwähnte Spreizung der Manschette 44. Die Manschettenbohrung verengt sich elastisch und legt sich dichtend um die Stange 24. Die Stange 24 wird dabei arretiert und die bestehende Durchflussanzeige bleibt erhalten. Vor allem wird die Kammer 11 zur Bohrung 43 hin abgedichtet und der Flüssigkeitsaustausch im Schauglas unterbrochen. Der "Ruhezustand" nach Fig. 5 herrscht selbstverständlich während dem weit überwiegenden Teil der Betriebszeit; Messungen (Zustand nach Fig. 3) werden normalerweise nur in großen Zeitabständen vorgenommen und dauern nur kurze Zeit, weshalb eine Ansammlung von Schmutz im Schauglas praktisch ausgeschlossen ist.

Eine Armatur mit einer Ausführung der Durchfluss-Messeinrichtung nach Fig. 3 bis 5 kann selbstverständlich auch mit einem im Gehäuse integrierten Drosselorgan (entsprechend dem Hahn 30 nach Fig. 1) versehen werden. Auch in diesem Fall ist die bei Fig. 1 beschriebene Anordnung der Hahn-Betätigungsachse a3 in Bezug auf die Achse a2 des Seitenstutzens 10 von Vorteil. Eine solche Variante bietet ebenfalls gute Ablesbarkeit und Zugänglichkeit bei unterschiedlichen Einbausituationen der Armatur.

In Fig. 3 ist strichpunktiert eine Wärmedämmung 55 angedeutet, wie sie insbesondere bei Warmwasser führenden Leitungen häufig angebracht wird. Wie ersichtlich, ist die Außengestalt der Armatur auch insofern günstig, als die betreffende Isolation (meist in Form von Halbschalen) nur geringfügig im Bereich des Seitenstutzens 10 ausgespart werden muss.

## Patentansprüche

1. Armatur zur Messung der Durchflussmenge eines hydraulischen Mediums durch eine Rohrleitung pro Zeiteinheit, mit einem einen Durchfluss-Hauptkanal (2) enthaltenden Armaturgehäuse (1), einer im Hauptkanal (2) angeordneten Drosselstelle (4), einem vor und hinter der Drosselstelle (4) mit dem Hauptkanal (2) verbundenen, einen Teildurchfluss führenden: Bypasskanal und einer vom Teildurchfluss beaufschlagten Durchfluss-Messeinrichtung (20, 21) mit beweglichem Mess- und Anzeigeorgan (24, 25, 26),
**dadurch gekennzeichnet,**
**dass** das Armaturgehäuse (1) einen Seitenstutzen (10) aufweist, der eine Nebenkammer (11) bildet, die ihrerseits mit ihrem Zu- und Abfluss den Bypasskanal bildet,
**dass** die Durchfluss-Messeinrichtung, die einen Messteil (20) und einen Anzeigeteil (21) aufweist, an der Öffnung des Seitenstutzens (10), diese nach außen abschließend, gehalten ist,
**dass** ein vom Teildurchfluss beaufschlagter Prallteller (25) des Messteils (20) in der Bohrung (13) eines den Zufluss zur Nebenkammer (11) bildenden Rohrstücks (12) angeordnet ist und durch eine in einer Axialbohrung (23) längsbeweglich geführte Verbindungsstange (24) mit einer Zeigerscheibe (26) des außerhalb des Seitenstutzens (10) angeordneten Anzeigeteils (21) verbunden ist.

2. Armatur nach Anspruch 1, **dadurch gekennzeichnet, dass** das Rohrstück (12) in den Hauptkanal (2) hineinragt.

3. Armatur nach Anspruch 1 oder 2, **dadurch gekennzeichnet, dass** die Verbindungsstange (24) ein durch Umfangsrillen (24a) gebildetes Sägezahnprofil aufweist, wobei jeweils in Radialebenen liegende Ringflächen (24b) der Rillen (24a) der Nebenkammer (11) zugekehrt sind.

4. Armatur nach Anspruch 1 oder 2, **dadurch gekennzeichnet, dass** die Verbindungsstange (24) von einer gummielastischen Manschette (44) umfasst ist, welche die Nebenkammer (11) zur Bohrung (43) hin abdichtet und, zwecks Freigabe der Verbindungsstange (24) während Messvorgängen, vom Anzeigeteil (21) her mittels eines axial verstellbaren Huborgans (38, 42) aufspreizbar ist.

5. Armatur nach Anspruch 4, **dadurch gekennzeichnet, dass** ein Schauglas (38) des Anzeigeteils (21) als von außen drehbare Gewindespindel mit zur Verbindungsstange (24) koaxialem Gewinde (41) ausgebildet ist, wobei die Gewindespindel (38) oder ein mit ihr verbundenes Teil (42) das Huborgan bildet

## Claims

1. An instrument for measuring the flow rate of a hydraulic medium through a pipeline per unit time, having an instrument housing (1) containing a main flow duct (2), a throttle location (4) disposed in the main duct (2), a bypass duct connected to the main duct (2) upstream and downstream of the throttle location (4) and conveying a partial flow, and a flow meter (20,21) on which the partial flow acts and provided with a movable measuring and indicating member (24,25,26),
**characterised in**
**that** the instrument housing (1) has a side connector (10) which forms a secondary chamber (11) which, in turn, forms the bypass duct with its inflow and outflow,
**that** the flow meter (20,21), which has a measuring part (20) and an indicating part (21), is mounted on the opening of the side connector (10) and outwardly seals the latter,
**that** a baffle plate (25) of the measuring part (20), which is acted upon by the partial flow, is disposed in the bore (13) of a pipe section (12) forming the inflow to the secondary chamber (11), and is connected by a connecting rod (24), which is guided for longitudinal movement in an axial bore (23), to an indicator disc (26) of the indicator part (21) disposed outside the side connector (10).

2. An instrument according to Claim 1, **characterised in that** the pipe section (12) projects into the main duct (2).

3. An instrument according to Claim 1 or 2, **characterised in that** the connecting rod (24) has a sawtooth profile formed by circumferential grooves, wherein annular surfaces (24b) of the grooves (24a) respectively situated in radial planes face the secondary chamber (11).

4. An instrument according to Claim 1 or 2, **characterised in that** the connecting rod (24) is surrounded by a rubberlike sleeve (44) which seals the secondary chamber with respect to the bore (42) and, for the purpose of releasing the connecting rod (24) during measuring operations, can be expanded by means of an axially adjustable lifting member (38,42).

5. An instrument according to Claim 4, **characterised in that** an inspection glass (38) of the indicating part (21) is in the form of an externally rotatable threaded spindle having a screw-thread (41) coaxial to the connecting rod (24), wherein the threaded spindle (38) or a part (42) connected thereto forms the lifting member.

## Revendications

1. Raccord pour mesurer le débit d'un fluide hydraulique à travers une conduite par unité de temps, comportant un boîtier de raccord (1) présentant un canal principal d'écoulement (2), un point d'étranglement (4) disposé dans le canal principal (2), un canal de dérivation relié au canal principal (2) devant et derrière le point d'étranglement (4) et guidant un écoulement partiel, et un dispositif de mesure du débit (20,21) alimenté par l'écoulement partiel et présentant un organe mobile de mesure et d'affichage (24 ,25, 26), **caractérisé en ce que** le boîtier de raccord (1) présente une tubulure latérale (10) formant une chambre secondaire (11) qui, avec son entrée et sa sortie, constitue à son tour le canal de dérivation de telle sorte que le dispositif de mesure du débit qui présente un élément de mesure (20) et un élément d'affichage (21), est maintenu sur l'ouverture de la tubulure latérale (10) en fermant ladite ouverture vers l'extérieur, **en ce qu'**une plaque de rebondissement (25), faisant partie de l'élément de mesure (20) et alimentée par l'écoulement partiel, est disposée dans l'orifice (13) d'un segment de tuyau (12) formant l'entrée de la chambre secondaire (11) et est reliée, par une tige de raccordement (24) guidée dans un trou axial (23) selon un déplacement longitudinal, à un cadran à aiguille (26) de l'élément d'affichage (21) disposé à l'extérieur de la tubulure latérale (10).

2. Raccord selon la revendication 1, **caractérisé en ce que** le segment de tuyau (12) dépasse dans le canal principal (2).

3. Raccord selon la revendication 1 ou 2, **caractérisé en ce que** la tige de raccordement (24) présente un profil en dent de scie formé par des cannelures périphériques (24a) qui présentent des surfaces annulaires (24b) situées respectivement dans des plans radiaux, les surfaces annulaires étant adjacentes à la chambre secondaire (11).

4. Raccord selon la revendication 1 ou 2, **caractérisé en ce que** la tige de raccordement (24) est entourée par une manchette (44) élastique qui bouche hermétiquement la chambre secondaire (11) du côté de l'orifice (43) et, dans le but de libérer la tige de raccordement (24), peut être élargie à partir de l'élément d'affichage (21) à l'aide d'un organe de levage (38, 42) réglable axialement.

5. Raccord selon la revendication 4, **caractérisé en ce qu'**un verre de regard (38) de l'élément d'affichage (21) est conçu comme une broche filetée pivotant de l'extérieur et présentant un filet (41) coaxial avec la tige de raccordement (24), la broche filetée (38) ou un élément (42) relié à ladite broche formant l'organe de levage.
